# EUROPÄISCHE PATENTSCHRIFT

(11) **EP 0 857 351 B1**
(45) Veröffentlichungstag und Bekanntmachung des Hinweises auf die Patenterteilung: **02.05.2003**
(21) Anmeldenummer: 96934483.7
(22) Anmeldetag: 28.09.1996
(51) Int. Cl.: H01H 1/58

(54) **SCHALTER MIT FLEXIBLER LEITERFOLIE ALS ORTSFESTER KONTAKT UND VERBINDUNG ZU ANSCHLUSSKONTAKTEN**
SWITCH WITH FLEXIBLE CONDUCTIVE FOIL AS THE FIXED CONTACT AND CONNECTION TO CONTACTS
COMMUTATEUR AVEC FILM CONDUCTEUR COMME CONTACT FIXE ET RACCORDEMENT AUX CONTACTS DE CONNEXION

(30) Priorität: 18.10.1995 DE 19538767
(43) Veröffentlichungstag der Anmeldung: 12.08.1998
(73) Patentinhaber: Valeo Schalter und Sensoren GmbH, 74321 Bietigheim-Bissingen (DE)
(72) Erfinder: HECHT, Walter, D-74321 Bietigheim-Bissingen (DE); GÖTZINGER, Bertram, D-74229 Oedheim (DE); KLEIN, Rudolf, D-74348 Lauffen (DE)
(74) Vertreter: Dreiss, Fuhlendorf, Steimle & Becker
(86) Internationale Anmeldenummer: EP9604241
(87) Internationale Veröffentlichungsnummer: WO97015060

(56) Entgegenhaltungen:
- EP-A- 0 055 053
- DE-U- 9 411 391
- FR-A- 2 262 474
- FR-A- 2 330 074
- GB-A- 929 802
- GB-A- 1 319 354
- US-A- 3 745 288

## Beschreibung

Die Erfindung betrifft einen Schalter für Kraftfahrzeuge, insbesondere Lenkstockschalter, mit den Merkmalen des Anspruchs 1.

Bei diesen Schaltern müssen Verbindungen zwischen den üblicherweise in eine Grundplatte eingegossenen Kontakten und den Anschlusskontakten des Schalters geschaffen werden.

An sich ist es bekannt, in die Grundplatte eingegossene Kontaktbleche als Kontaktstifte aus dem Gehäuse herauszuführen, so dass die ortsfesten Kontakte und die Anschlussstecker durch einstückige Kontaktbleche miteinander verbunden sind. Derartige Maßnahmen sind aber nur dann zweckmäßig, wenn nicht zu viele Anschlüsse aus dem Schalter herausgeführt sind und außerdem der Verbindungsweg zwischen den ortsfesten Kontakten und den Anschlusssteckern kurz ist. Andererseits gibt es aber eine Reihe von Schaltern, bei denen die ortsfesten Kontakte weit von den Anschlusssteckern entfernt sind. Dies ist beispielsweise in Lenkstockschaltern der Fall, bei denen Schaltkontakte in dem drehbaren oder eindrückbaren Hebelende des Schalthebels untergebracht sind. Derartige Kontakte sind beispielsweise in der DE-AS 2853746 gezeigt. Bei diesem Schalter werden die in dem Griff angeordneten ortsfesten Kontakte über bewegliche Leitungen im Inneren des Schalthebels zu dem Schaltergehäuse am Lenkstock geführt. Die Verbindung der Schalter mit den Kontakten ist vergleichsweise aufwendig.

Aus der EP 0 055 053 A1 ist ein elektrischer Schalter bekannt geworden, der eine Leiterfolie zum Verbinden der Anschlusskontakte mit den ortsfesten Schaltkontakten aufweist. Jedoch bedarf es für die ortsfesten Kontakte zusätzlicher Elemente und der Schalter ist nicht flexibel auf unterschiedliche Schaltaufgaben einstellbar.

Aus der GB-A-929,802 ist ein Drehschalter bekannt, bei dem die Kontaktstifte an eine flexible Leiterbahn angeschlossen sind.

Ausgehend von der EP 0 055 053 A1 liegt der Erfindung die Aufgabe zugrunde einen Schalter bereitzustellen, der einfach aufgebaut ist und flexibel an unterschiedliche Kontaktaufgaben anpassbar ist.

Diese Aufgabe wird mit einem Schalter gelöst, der die Merkmale des Anspruchs 1 aufweist.

Der Schalter weist also statt getrennter einzeln mit den ortsfesten Kontakten zu verbindender flexibler Leitungen einen einzigen flexiblen Leiter auf, der auf einer Leiterfolie aufgebracht ist. Diese Verbindung kann daher das Aussehen einer langgestreckten flexiblen Folie besitzen, auf der mittels aus der Leiterplattentechnik bekannter Maßnahmen zueinander im wesentlichen parallele Leiterbahnen aufgebracht sind. Diese Leiterfolien sind sehr leicht herzustellen und eröffnen, wie weiter unten noch erläutert wird, auch eine neuartige Verbindungstechnik zwischen den ortsfesten Kontakten und den Anschlusskontakten des Schalters sowie weitere sehr vorteilhafte Möglichkeiten, die den Aufbau eines einfach herzustellenden zuverlässigen Schalters mit langen Verbindungsleitungen ermöglichen.

In der Praxis hat sich die Verwendung der Leiterbahnen direkt als ortsfeste Kontakte durchaus bewährt. Während einerseits die längsgestreckten auf der Folie aufgebrachten Leiterbahnen sehr schmal sein können, so dass sich die Leiterfolie in diesem Bereich leicht verlegen lässt, ist andererseits zu beachten, dass durch mechanische Gegebenheiten die beweglichen Kontakte und damit auch die zugeordneten ortsfesten Kontakte einen bestimmten Abstand voneinander haben müssen. Erfindungsgemäß gehen die über die Leiterstrecke vergleichsweise schmalen und vorzugsweisen parallel zueinander geführten Leiterbahnen in flächige Kontaktbereiche über, die in ihrer Gesamtheit in Draufsicht etwa das Aussehen einer kleinen Leiterplatte haben.

Die flächigen ortsfesten Kontakte sind hervorragend für Schalter geeignet, bei denen die beweglichen Kontakte eine schiebende Bewegung durchführen, da in der zur Leiterplatte parallelen Schieberichtung kaum Unebenheiten auftreten. Zudem wird aber ein schlagartiges Abheben der Schiebekontakte von den ortsfesten flächigen Kontakten erreicht. Während man also normalerweise den schiebenden beweglichen Kontakt von dem leitenden ortsfesten Bereich in einen isolierten Bereich verschiebt, wird zur Beendigung der Kontaktgabe der bewegliche Kontakt bei einer schiebenden Bewegung gleichzeitig angehoben und so schlagartig von dem flächigen ortsfesten Kontakt getrennt. Ein besonderer Vorteil kann auch darin bestehen, dass durch ein einfaches Auswechseln der Folie unterschiedliche Kontaktfolgen möglich sind, bis hin zu ortsfesten Kontakten, die gänzlich von der Folie abgedeckt werden und somit überhaupt nicht mehr kontaktierbar sind. Man erhält somit eine besonders vorteilhafte Möglichkeit durch Auswechseln oder Anpassen der Folienform die Schaltfunktionen eines ansonsten unveränderten Schalters an unterschiedliche Bedürfnisse anzupassen.

Ein besonderer Vorteil der Erfindung besteht darin, dass die flexiblen Leiter an dem den ortsfesten Kontakten zugewandten Enden der Verbindung entsprechend der Merkmalskombination nach Anspruch 2 direkt in ortsfeste Kontakte übergehen können. Hierzu ist es nur notwendig, auf der den beweglichen Kontakten zugewandten Seite der Verbindung die Isolation zu entfernen oder dort erst gar keine Isolation aufzubringen, so dass die Leiter direkt als Kontakte wirken können. Die über die Verbindung laufenden Leiterbahnen gehen somit einstückig in ortsfeste Kontakte über, ohne dass diese Kontakte speziell noch mit den Verbindungsleitungen verbunden werden müssten.

Da nun aber die flexible Leiterfolie nicht die Festigkeit besitzt, um ein hinreichend stabiles Widerlager für den zugeordneten beweglichen Schalterkontakt bilden zu können, empfiehlt sich in Weiterbildung der Erfindung die Merkmalskombination nach Anspruch 3. Durch diese Maßnahme wird erreicht, dass die ortsfesten Leiterbahnkontakte eine gegenüber dem Schaltergehäuse stabile Lage besitzen und so für eine gute Kontaktgabe mit den zugehörigen beweglichen Kontakten geeignet sind.

Zur leichteren Montage und zur Sicherung der Folie gegenüber der darunter befindlichen Platte empfiehlt sich in Weiterbildung die Merkmalskombination nach Anspruch 4. Hierdurch wird sichergestellt, dass die Folie in ihrem Einbauzustand auch die den beweglichen Kontakten zugeordnete Lage einnimmt und in dieser Lage gehalten ist. Die Fixierung der ortsfesten Kontakte gegenüber der Platte lässt sich noch durch Maßnahmen gemäß Anspruch 5 verbessern. Es sind aber auch andere Verbindungstechniken denkbar, wie beispielsweise das Eingießen der Folie in eine Gehäuseplatte oder das Verschweißen der Vorsprünge mit der Platte oder ein nietenartiges Verstemmen unter Wärmeeinwirkung dieser Vorsprünge.

Unabhängig davon, ob nun die Leiterbahnen selbst ausschließlich als ortsfeste Kontakte wirken oder durch zusätzliches Kontaktmaterial verstärkt werden, empfiehlt sich hinsichtlich des Anschlusses der Leiterfolie an Aufnahmestecker oder ähnliches die Merkmalskombination nach Anspruch 6. Danach werden in mit den Kontaktblechen vergleichbarer Art Kontakte auf die einzelnen vorzugsweise parallel zueinander laufenden Enden der Leitungen aufgebracht, die aber nun nicht als ortsfeste Kontakte dienen und mit dem Gehäuse fest verbunden sind, sondern die vorzugsweise Anschlussstifte tragen, auf die ein Verbindungsstecker aufgesteckt werden kann. Es sind auch andere Verbindungstechniken vorstellbar, wie z. B. die Aufnahme der Steckerenden in Schneid-Steckverbinder, die Verlötung der Stiftenden mit Leiterplattenkontakten im Lötbad und ähnliches.

Eine besonders vorteilhafte Ausgestaltung für die Verbindung von Anschlüssen in dem Schaltergehäuse mit den zugehörigen ortsfesten Kontakten ergibt sich aus der Merkmalskombination nach Anspruch 7. Danach können, wie weiter oben schon erläutert, die einzelnen ortsfesten Kontakte flächig ausgestaltet sein, so daß sie in der quer zur Längsrichtung der Leiterverbindungen verlaufenden Richtung eine größere Ausdehnung haben als die schmalen zueinander parallelen Leitungsverbindungen.

Weiter oben war schon erläutert worden, daß der die ortsfesten Kontakte tragende Abschnitt der Folie durch Öffnungen in der Folie gesichert sein kann, in welche aus dem Schaltergehäuse aufstehende Vorsprünge ragen. Vergleichbare Maßnahmen können sich gemäß den Merkmalen nach Anspruch 8 auch für den Verbindungsabschnitt empfehlen, bei dem die schmalen Leiterbahnen parallel zueinander über eine größere Wegstrekke geführt sind.

Die Erfindung ist besonders vorteilhaft für Schalter anwendbar, die entsprechend der Merkmalskombination nach Anspruch 9 sich durch lange Verbindungsleitungen zwischen dem Anschlußbereich und den ortsfesten Kontakten auszeichnen. Dies ist beispielsweise bei Lenkstockschaltern der Fall. Insgesamt ist die hier beschriebene Verbindungstechnik aber auch für alle Fälle anwendbar, in denen eine längere Verbindungsleitung aus einem Schaltergehäuse heraus zu einer weiter entfernt liegenden Anschlußstelle geführt werden muß. Insbesondere empfiehlt sich in Weiterbildung der Erfindung bei einem Lenkstockschalter entsprechend der Merkmalskombination nach Anspruch 10 die Verbindung der Leiterbahnen in Längsrichtung des Schalthebels zu führen, da man hier eine besonders kurze Verbindung erhält.

Ein besonderer Vorteil der Erfindung besteht darin, daß die Leiterbahnen zum Einen flexibel aber durch die Folie zueinander im Abstand gehalten sind. Das bedeutet, daß die gesamte Verbindungsleitung zum einen sehr flach und zum anderen leicht biegbar ist. Weiterhin ist der Querschnitt über die Summe aller Leiterbahnen einschließlich der Isolierung sehr gering. Aus alledem resultiert, daß sich die Leiterbahnen nicht nur innerhalb des Schalthebels eines Lenkstockschalters sondern auch in seinem äußeren Bereich verlegen lassen, etwa indem man die Leiterbahn gewölbt um die Oberfläche des Schalthebels führt. Nachteilig ist hierbei nur, daß in diesem Falle je nach Anordnung des Schalthebels die Leiterbahn von außen sichtbar ist. Für diesen Fall empfiehlt sich in Weiterbildung der Erfindung die Merkmalskombination nach Anspruch 11. Danach setzt sich der Schalthebel in seiner Längsrichtung gesehen aus mindestens zwei sich etwa über die Länge der Verbindungsleitung erstreckenden Hebelteilen zusammen. Da diese beiden Hebelteile eine Grenzfläche miteinander haben, kann im Bereich dieser Grenzfläche die flexible Leiterbahn am Schalthebel kaschiert werden. Dabei sind mit Vorteil verschiedene Möglichkeiten gegeben. Zum einen kann sich der Schalthebel aus zwei im wesentlichen konzentrischen Teilen gebildet sein, wobei die Leiterfolie an der Oberfläche des inneren Teils befestigt und dann das zweite Teil über das erste als Blende geschoben wird. Es ist aber auch denkbar, daß der Schalthebel einen über seine Längsrichtung reichenden Schlitz besitzt, in den die Leiterbahn aufgrund ihres geringen Querschnitts leicht eingelegt wird. Der in Längsrichtung des Schalthebels verlaufende Schlitz kann beispielsweise durch Rastmittel derart geschlossen werden, daß der Schalthebel die für Schaltvorgänge notwendige Steifigkeit behält. Es ist auch denkbar, die Leiterbahn zumindest um einen Sektor des Schalthebels zu legen, der den Zutritt mechanisch zerstörender Kräfte nicht erwarten läßt.

Eine besonders vorteilhafte Ausgestaltung ergibt sich aber durch die Anwendung der Merkmalskombination nach Anspruch 11. Danach ist der Schalthebel durch zwei in seiner Längsrichtung verlaufende Hebelteile geteilt, die durch eine radiale Bewegung zueinander sich miteinander vereinen lassen. Dabei empfiehlt es sich insbesondere, die Merkmalskombination nach Anspruch 12 anzuwenden. Diese Ausgestaltung besteht im Prinzip darin, auf der den eigentlichen Hebel bildenden Oberschale eine Unterschale auszurasten, welche als Blende und ggf. als Aufnahme für die Leiterbahn dient.

Hierbei empfiehlt sich insbesondere die Merkmalskombination nach Anspruch 13, bei der die Unterschale in die Oberschale eingerastet wird. Dabei kann entsprechend der Merkmalskombination nach Anspruch 14 die Unterschale und dort insbesondere deren rastende Vorsprünge als Aufnahme für die biegsame Leiterfolie dienen.

Für die Lage der Leiterfolie bieten sich dabei mehrere vorteilhafte Möglichkeiten. Zum Einen kann die Folie in der Symmetrieebene der beiden Schalen und damit im wesentlichen senkrecht zu deren Oberfläche geführt sein. Damit liegt die Leiterbahn etwa in Richtung der durch die Rastmittel aufgespannten Querschnittsebene. Besonders vorteilhaft ist hierbei, daß die Rastmittel vergleichsweise klein ausgestaltet sein können. Weniger vorteilhaft ist allerdings, daß zumindest in einer der beiden Schalen eine Längsnut eingefügt sein muß, die tief genug ist, um die flexible Leiterbahn in ihrer gesamten Breite aufzunehmen.

Aus optischen Gründen dürfte es sich empfehlen, daß die Nut gegenüber der Kontaktebene der ortsfesten Kontakte um 90 Grad gedreht ist. Hierdurch läßt sich mit Vorteil die Merkmalskombination nach Anspruch 15 anwenden.

Einen anderen sehr vorteilhaften Weg geht die Merkmalskombination nach Anspruch 16. Danach wird die Leiterbahnfolie im wesentlichen parallel zur Oberfläche der Unterschale verlegt, wobei allerdings die Krümmung der Leiterbahn sehr viel größer sein kann als die Oberflächenkrümmung der Unterschale. Durch diese Maßnahme wird erreicht, daß ein Drehen der Leiterbahn um etwa 90 Grad in deren Längsebene nicht mehr notwendig ist, wodurch die Leiterbahn geschont wird und sich deren Verlegung erleichtert. Die beschriebene Merkmalskombination schafft aber auch die Voraussetzung für eine weitere vorteilhafte Ausgestaltung des Schalthebels. Da nämlich die Leitungsverbindung nun nicht mehr durch den Innenraum des Hebels selbst sondern in seinem äußeren Bereich verlegt wird, kann dieser als in sich geschlossener Hohlkörper ausgestaltet werden. Es sind somit keine Öffnungen mehr in dem Schalthebel notwendig, die ein Durchführen der Leitungen durch dessen Innenraum gestatten. Hierdurch wird es möglich, die in Anspruch 17 geschilderten Maßnahmen mit Vorteil anzuwenden, was zur Stabilität des Schalthebels wesentlich beiträgt.

Ausführungsbeispiele der Erfindung werden nachfolgend anhand der Zeichnung erläutert. Darin zeigt
- Fig. 1: eine erfindungsgemäße flexible Leiterfolie in Draufsicht,
- Fig. 2: eine Befestigungsplatte für die Auflage des ortsfesten Kontaktbereichs der Folie nach Fig. 1,
- Fig. 3: eine Seitenansicht der Platte nach Anspruch 2,
- Fig. 4: einen Ausschnitt der Folie nach Fig. 1 mit aufgebrachter Kontaktspinne für die ortsfesten Kontakte und aufgecrimpten Anschlüssen,
- Fig. 5: die Möglichkeit der Faltung der symbolisch angedeuteten Leiterfolie um ihre Längsachse um etwa 90 Grad,
- Fig. 6: eine vergrößerte Darstellung der Kontaktspinne mit ortsfesten Leiterfolienkontakten nach Fig. 4,
- Fig. 7: das Vercrimpen der Kontaktspinne nach Fig. 6 in ausschnittsweiser geschnittener Darstellung aus der Seitenansicht,
- Fig. 8: den geöffneten Endbereich des Schalthebels für einen Lenkstockschalter,
- Fig. 9: in geschnittener Darstellung einen aus zwei Schalen gefertigten Schalthebel für einen Lenkstockschalter,
- Fig. 10: den mit einem Schalter in Hebelgriff versehenen Schalthebel nach Fig. 9,
- Fig. 11: einen Querschnitt durch den Lenkstockschalter in einem dem Schalter nach Fig. 10 nahen Bereich,
- Fig. 12: einen Schnitt durch den Schalter in einem den Anschlüssen nahen Bereich,
- Fig. 13: eine Verlegung der Leiterfolie in der Grenzebene zwischen Unterschale und Oberschale und
- Fig. 14: eine Verlegung der Folie in der Unterschale.

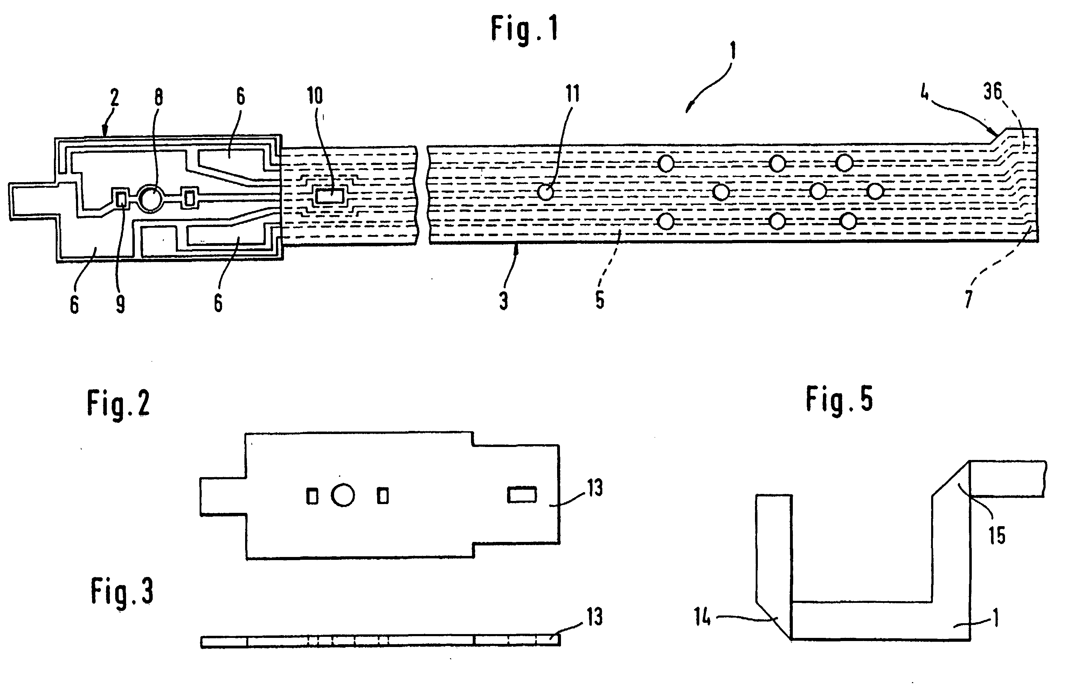

In Fig. 1 ist eine flexible Leiterfolie 1 gezeigt, die sich in einen Kontaktabschnitt 2, einen Verbindungsabschnitt 3 und in einen Anschlußabschnitt 4 einteilen läßt.

Der Kontaktabschnitt 2 trägt die ortsfesten Kontakte eines Schalters, während die schmalen Leiterbahnen 5 zueinander parallel eine Verbindung zwischen dem Kontaktabschnitt 2 und dem Anschlußabschnitt 4 schaffen. Der Anschlußabschnitt 4 selbst trägt wie weiter unten noch erläutert wird Anschlußkontakte 38. Die Leiterbahnen 5 gehen in Kontaktflächen 6 auf dem Kontaktabschnitt über. Entsprechendes gilt hinsichtlich der Anschlußflächen 7 im Anschlußabschnitt 4.

Die flexible Leiterfolie 1 ist in konventioneller Technik hergestellt, deren Herstellungsverfahren nicht Gegenstand der vorliegenden Erfindung ist. Im Prinzip sind Herstellungsverfahren hier anwendbar, wie sie auch aus der Leiterplattentechnik bekannt sind.

Für die Erfindung wichtig ist, daß im Gegensatz zu dem Kontaktabschnitt 2 sowohl der Verbindungsabschnitt 3 als auch der Anschlußabschnitt 4 mit einer dem Betrachter zugewandten Isolierschicht abgedeckt sind, während dies hinsichtlich des Kontaktabschnittes 2 nicht der Fall ist. Dort liegen die leitenden Kontaktflächen 6 offen. Die Dicke der Folie 1 ist sehr klein, so daß die Folie insgesamt ein gut verwölbbares und verkrümmbares Gebilde ist.

Sowohl in dem Kontaktabschnitt als auch in dem Verbindungsabschnitt sind Öffnungen 8 bis 11 vorgesehen, die der Zentrierung und Fixierung der Folie 1 gegenüber gehäusefesten Bauelementen dienen. Teilweise, wie beispielsweise hinsichtlich der Öffnungen 9 und 10, haben die Öffnungen auch die Aufgabe, den Durchtritt für Bauelemente zu ermöglichen, wie beispielsweise aufgerastete Rastkonturen, vorgespannte Raststifte und ähnliches. Hinsichtlich der Öffnungen 11 im Verbindungsabschnitt 3 ist noch wichtig, daß diese nicht so groß gewählt werden, damit die Leiterbahnen 5 nicht zu stark geschwächt werden.

Die Kontaktflächen 6 dienen zur direkten Kontaktgabe als ortsfeste Kontakte für einen Schalter, so daß die Durchschaltung von Stromkreisen dadurch geschieht, daß ein in der Zeichnung nicht dargestellter beweglicher Kontakt mit der zugehörigen Kontaktfläche 6 in elektrische Verbindung kommt, wobei die beweglichen Kontakte sich in schiebender Bewegung parallel zur Betrachtungsebene in Fig. 1 aber auch senkrecht hierzu in einer Hubbewegung oder in einer Drehbewegung bewegen können.

Erstaunlicherweise hat sich das vergleichsweise dünne Kontaktmaterial der Kontaktflächen als recht widerstandsfähig erwiesen, so daß es durchaus für die direkte Kontaktgabe als ortsfester Kontakt geeignet ist.

Fig. 2 zeigt die Draufsicht auf eine ortsfest in dem Betätigungshebel eines Lenkstockschalters anbringbare Platte, die unter dem Kontaktabschnitt 2 der Leiterfolie 1 liegt, um ein Verwölben der betreffenden Kontaktflächen gegenüber einem aufsetzenden beweglichen Kontakt zu verhindern und so ein geeignetes Widerlager zu bilden. Die Platte 13 besteht aus isolierendem Material, beispielsweise Kunststoff, und besitzt zu den Öffnungen 8 bis 10 analoge Öffnungen, durch welche Bauelemente hindurchtreten können.

Fig. 3 zeigt eine Seitenansicht der Platte nach Fig. 2, wobei die Stärke der Platte 13 derart gewählt ist, daß sie eine hinreichende Steifigkeit gegenüber der Kraft der aufsetzenden beweglichen Kontakte besitzt.

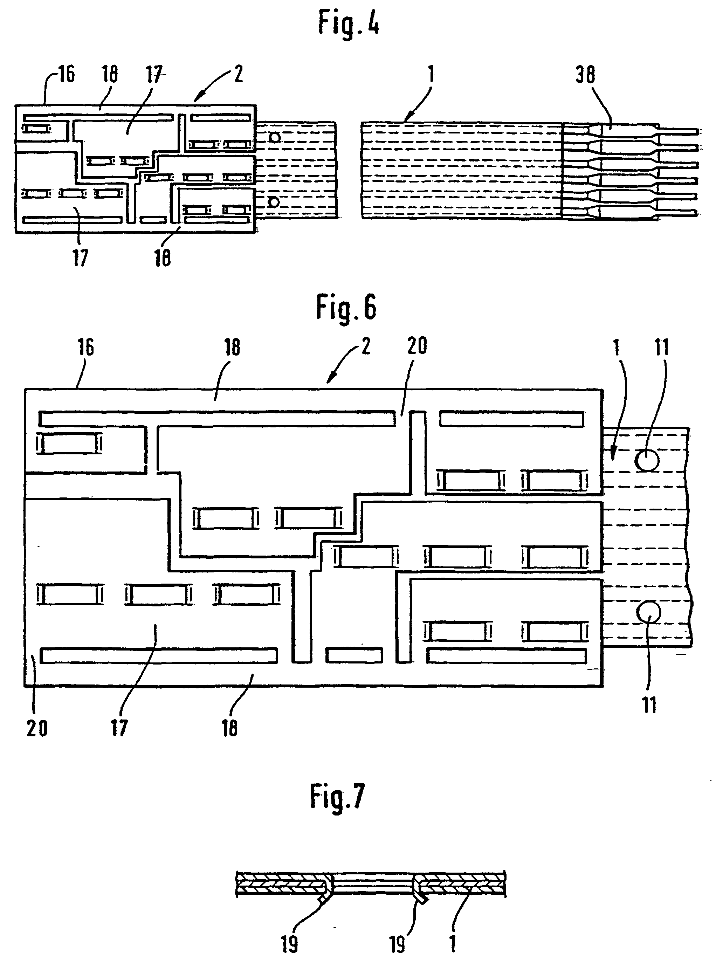

In Fig. 5 ist ein möglicher Verlauf der flexiblen Leiterfolie nach Fig. 1 dargestellt. Fig. 5 zeigt, daß die Folie 1 recht lang sein kann, während in der Zeichnung in Fig. 1 und Fig. 4 ein mittleres Stück der Folie nicht dargestellt wurde. In Fig. 5 ist weiterhin die Möglichkeit aufgezeigt, daß die Folie 1 gefaltet werden kann, so daß sie sich zwar einfach als längsgestreckter Leiter herstellen oder im Handel erwerben läßt, aber auch in gekrümmten oder meanderförmigen Bahnen verlegen läßt. Dies geschieht durch die Faltungen 14,15.

In Fig. 4 ist eine sogenannte Kontaktspinne 16 auf den Kontaktabschnitt 2 nach Fig. 1 aufgesetzt. Die Kontaktspinne 16 besitzt in an sich bekannter Weise inselförmige Kontaktbereiche 17, die über Verbindungsstreifen 18 miteinander einstückig verbunden sind. Die Kontaktbereiche 17 entsprechen zugeordneten Kontaktflächen 6 auf der Leiterfolie 1. Um die einzelnen Kontaktbereiche 17 der aus einem einstückigen Blech bestehenden Kontaktspinne 16 mit den Kontaktflächen 6 zu verbinden, werden diese wie aus Fig. 7 ersichtlich, auf die zugeordneten Kontaktflächen aufgecrimpt. Dabei durchdringen aus dem Blech 16 herausgestanzte Spitzen 19 die zugehörigen Kontaktflächen einschließlich der Leiterfolie 1 und werden durch Verstemmen umgebogen (siehe Fig. 7). Nachdem die Kontaktspinne 16 lagegerecht auf den Kontaktabschnitt 2 aufgebracht ist, werden die Verbindungsstreifen 18 durch Auftrennen der Stege 20 abgetrennt, wodurch die einzelnen inselförmigen Kontaktbereich 17 elektrisch voneinander getrennt sind (siehe auch Fig. 6).

In Fig. 4 ist der Anschlußabschnitt 4 gemäß Fig. 1 mit aufgecrimpten Anschlußkontakten 38 versehen, wobei die mit den Spitzen 19 in Fig. 7 vergleichbaren, nicht dargestellten Spitzen der Anschlußkontakte 38 durch die Isolierschichten an der Oberfläche und Unterfläche der Leiterfolie 1 stoßen, dabei die kupfernen Leiterbahnen durchschneiden und so in Kontakt mit den Leiterbahnen 5 kommen. Die Isolierstege 36 sind im Bereich des Anschlußabschnittes breiter als im Verbindungsabschnitt 3, so daß hier die Breite der flexiblen Leiterfolie 1 zunimmt. Auch der Kontaktabschnitt 2 ist breiter als der Verbindungsabschnitt 3, da die Kontaktflächen sehr viel breiter als die Leiterbahnen 5 sind und die Verbindungen der in Fig. 1 weit links befindlichen Kontaktflächen um die weiter rechts liegenden Kontaktflächen 6 herumgeführt werden müssen.

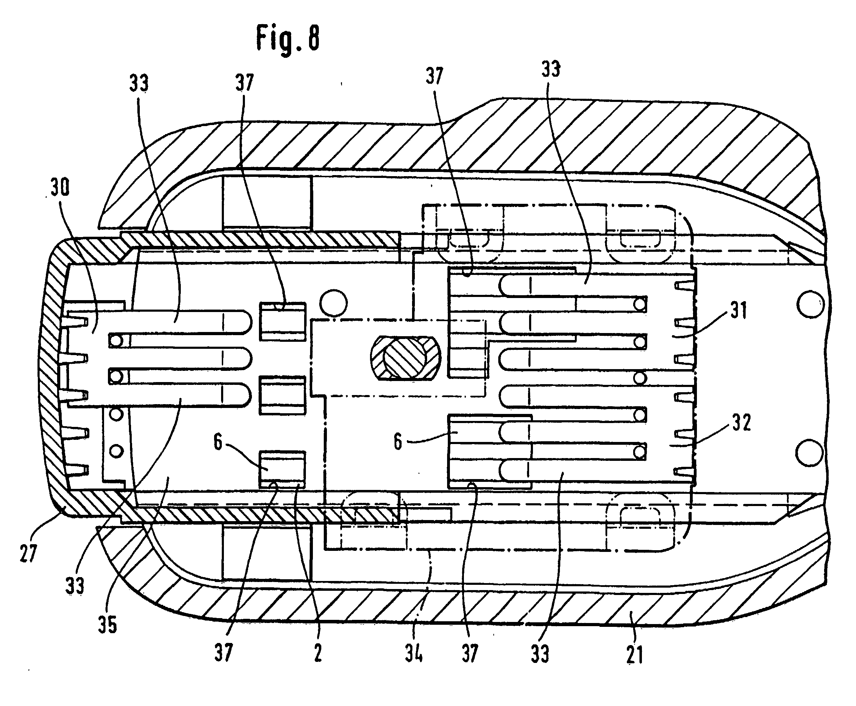

Aus Fig. 8 und 10 ist eine Schalterkonstruktion für einen in den Griff eines Lenkstockschalters eingebrachten Schalter entnehmbar, für welche die Erfindung mit Vorteil eingesetzt werden kann. Dabei zeigt die Fig. 8 eine Unterschale 21 eines aus zwei sich längs des Hebels erstreckenden Schalen bestehenden Schalthebels 22. In die Unterschale 21 ist eine Abstützung 23 für die Platte 13 eingelassen, um das in den Innenraum des Schalthebels 22 ragende Ende der Platte 13 abzustützen und die Platte gegenüber möglichen Verschiebungen zu sichern. Auf der Platte befindet sich, wie weiter oben schon im Zusammenhang mit Fig. 1 bis 3 erläutert, der Kontaktabschnitt 2 der Leiterfolie 1. Auf die Platte 13 ist, die Leiterfolie 1 durchdringend, eine Rastkontur 24 aufgerastet, der die Raststellungen für den Schieber eines Schiebeschalters 26 festlegt. Sowohl an dem Schieber 25 des Schiebeschalters als auch an einem axial beweglich angeordneten Druckknopf 27 eines Druckschalters 28 sind einoder mehrarmige Kontaktfedern 29,30,31,32 befestigt.

Die einzelnen Arme 33 der genannten Kontaktfedern weisen mit ihren Enden auf den Kontaktabschnitt 2 der Leiterfolie. Somit bilden die Arme 33 die beweglichen Kontakte der beiden genannten Schalter, die mit den ortsfesten Kontakten auf dem Kontaktabschnitt 2 in elektrischen Kontakt treten können. In Fig. 8 ist die Kontur eines Mitnehmers 34 des Schiebeschalters 26 angedeutet, durch dessen Parallelverschiebung zum Kontaktabschnitt 2 auch die mit ihm verbundenen Kontaktfedern 31,32 parallel verschoben werden.

Eine für die Erfindung sehr wichtige Besonderheit besteht nun darin, daß der Kontaktabschnitt 2 durch eine Isolierfolie 35 abgedeckt ist, die nur an bestimmten Stellen durch ihre Ausschnitte 37 den Kontaktabschnitt 2 mit seinen Kontaktflächen 6 freigibt. Somit ist sichergestellt, daß nur in ganz bestimmten Stellungen der Kontaktfedern 29 bis 32 die Federarme 33 auf den zugehörigen Kontaktflächen 6 aufliegen können. Vorteilhaft ist dabei insbesondere, daß durch einfaches Auswechseln einer Folie die Reihenfolge der Kontaktgabe bzw. eine Kontaktgabe überhaupt festgelegt bzw. geändert werden kann. Hierzu muß die neue Folie nur mit geeigneten Ausschnitten 37 versehen sein. Ein besonderer Vorteil der Folie liegt auch darin, daß über die Kanten der Ausschnitte 37 die Enden der Federarme 33 schlagartig angehoben und von den Kontaktflächen 6 abgetrennt werden, wenn die Enden die Kanten der Ausschnitt 37 passieren. Auf diese Weise findet eine sehr schnelle Unterbrechung der Kontakte statt, die ein Bilden von Lichtbögen und damit ein Verunreinigen und Korrodieren der Kontakte weitgehend verhindert.

In Fig. 10 sind noch die Faltungen 14,15 der flexiblen Leiterfolie 1 angedeutet.

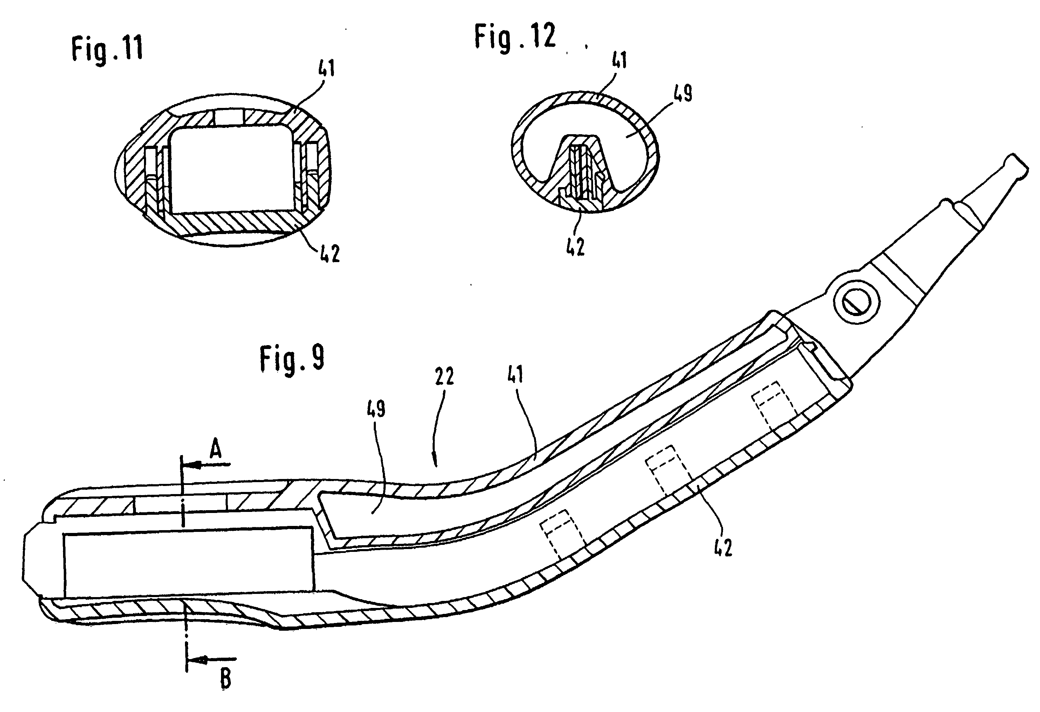

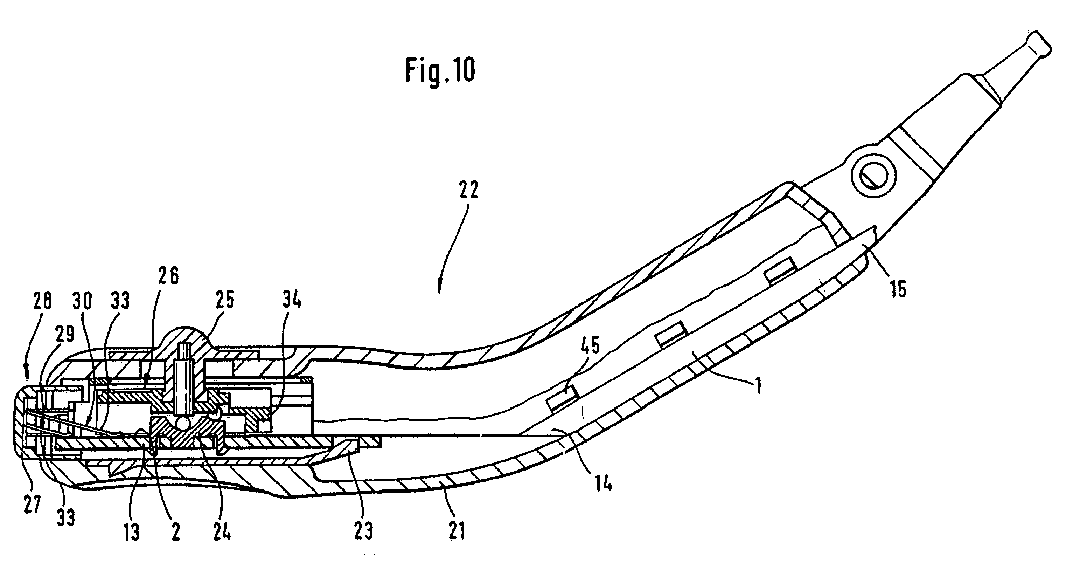

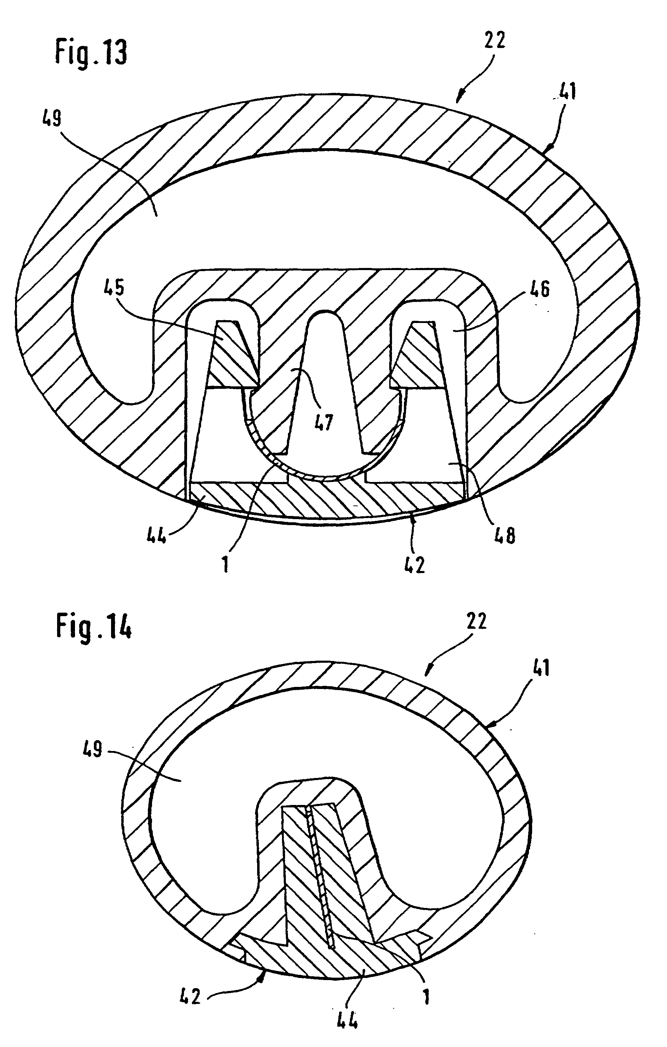

Weiter oben war schon geschildert worden, daß durch die erfindungsgemäße Verwendung einer flexiblen Leiterfolie als Verbindung zwischen dem Kontaktabschnitt und dem Anschlußabschnitt, die Verlegung in der Verbindungsleitung gegenüber den bekannten Verfahren stark vereinfacht werden kann. Hierzu wird wie insbesondere aus Fig. 9 und den Fig. 13 und 14 gut ersichtlich, der Schalthebel 22 aus zwei Schalen aufgebaut, nämlich aus einer Oberschale 41 und einer Unterschale 42. Die Unterschale kann vergleichsweise kleine Abmessungen haben und im wesentlichen als Blende zur Abdeckung der Aufnahme der Leiterfolie 1 in der Oberschale 41 dienen. Sie kann aber auch etwas größer gehalten sein und selbst die Leiterfolie aufnehmen. Vorschläge hierzu sind in Fig. 13 und 14 gezeigt, die jeweils einen Querschnitt an geeigneter Stelle durch den Schalthebel 22 zeigen. Danach besteht die Unterschale 42 im wesentlichen aus einem Grundkörper 44, der längs des Schalthebels im wesentlichen als Blende fungiert. Von dem Grundkörper 44 gehen Rastvorsprünge 45 aus, die in entsprechende Ausnehmungen 46 in der Oberschale 41 ragen und dort mit federnden Rastlappen 47 verrastet sein können. Die Fig. 11 und 12 zeigen weitere Möglichkeiten, die Rastvorsprünge bzw. Rastlappen der Schalen kammartig miteinander zu verrasten, um hier noch eine größere Stabilität der Rastverbindung zu erreichen. In Fig. 14 ist die Unterschale 42 mit einem Schlitz zur Aufnahme der Leiterfolie 1 versehen. Da hier die Leiterfolie senkrecht zum Grundkörper 44 ausgerichtet ist, bedingt diese Art der Verlegung der Leiterfolie die weiter oben schon geschilderten Faltungen 14 bzw. 15, um die Leiterfolie in Höhe des Kontaktabschnitts 2 wieder im wesentlichen parallel zum Grundkörper 44 auszurichten. Eine andere, sehr zweckmäßige und raumsparende Verlegungsart zeigt Fig. 13. Danach ist die Leiterfolie 1 in gewölbter Form entlang der Innenkontur der Rastvorsprünge 45 verlegt, wobei die Rastvorsprünge zur Verbesserung der Federwirkung Aussparungen 48 besitzen.

Wie besonders aus den Fig. 9,12,13 und 14 ersichtlich, kann die Oberschale 41 teilweise als in sich geschlossener Hohlkörper ausgestaltet sein und somit einen in sich geschlossenen Innenraum 49 besitzen. Ein besonders wichtiges Merkmal der vorliegenden Erfindung zielt deshalb darauf ab, die Oberschale mit Hilfe eines der bekannten Gasinnendruckverfahren zu gießen bzw. zu spritzen. Dabei kann der Innenraum 49 mit einem Gas gefüllt sein und unter Druck stehen. Der wesentliche Vorteil besteht darin, daß zum einen die Wände der Oberschale vergleichsweise dünn gehalten werden können und die Oberschale gleichwohl die für die Betätigung des Schalthebels 22 notwendige Festigkeit behält. Zum anderen ist der Schalthebel 22 hierdurch recht gewichtsarm und materialsparend aufgebaut. Hinzu kommt, daß die Oberfläche der Oberschale eine sehr hohe Güte besitzt.

Aus Fig. 14 ist noch die Möglichkeit ersichtlich, die Unterschale 42 in eine Ausnehmung der Oberschale 41 einzuclipsen, indem seitliche Rastflügel in der Unterschale 42 in entsprechende Öffnungen der Oberschale einrasten. Fig. 11 stellt einen Schnitt durch den Schalthebel 22 etwa in Höhe der Schnittlinie A-B in Fig. 9 dar.

## Patentansprüche

1. Schalter, dessen Anschlusskontakte (38) der zu schaltenden Stromkreise mit seinen ortsfesten Kontakten (6), die in Verbindung mit seinen beweglichen Kontakten (33) die Stromkreise schalten, über flexible Leiter verbunden sind, wobei die flexiblen Leiter durch eine flexible Leiterfolie (1) gebildet sind, **dadurch gekennzeichnet, dass** die ortsfesten Kontakte (6) direkt durch die flächigen Kontaktflächen (6) auf dem Kontaktabschnitt der Leiterfolie (1) gebildet sind, wobei die flächigen Kontaktflächen in die flexible Leiterfolie (1) integriert und mit dieser einstückig verbunden sind, dass die ortsfesten Kontakte (6) beweglichen Kontakten (33) zugeordnet sind, die parallel zur Oberfläche der ortsfesten Kontakte (6) verschiebbar sind und dass die Kontaktflächen (6) der ortsfesten Kontakte durch Aussparungen einer auf den Abschnitt aufgelegten Isolierfolie (35) gebildet sind.

2. Schalter nach Anspruch 1, **dadurch gekennzeichnet, dass** die ortsfesten Kontakte (6) durch Leiterbahnen der flexiblen Leiterfolie (1) gebildet sind.

3. Schalter nach Anspruch 1 oder 2, **dadurch gekennzeichnet, dass** der die ortsfesten Kontakte tragende Kontaktabschnitt (2) der flexiblen Leiterfolie (1) auf einer ortsfest am Schalter angeordneten Platte (13) befestigt ist.

4. Schalter nach Anspruch 3, **dadurch gekennzeichnet, dass** zur Zentrierung des Kontaktabschnitts (2) auf der Platte (13) mindestens ein von der Platte (13) vorragender Vorsprung in eine entsprechende Öffnung (8 bis 12) in den Kontaktabschnitt (2) ragt.

5. Schalter nach Anspruch 2 oder 3, **dadurch gekennzeichnet, dass** der Kontaktabschnitt auf die Platte (13) aufgeklebt ist.

6. Schalter nach einem der Ansprüche 1 bis 5, **dadurch gekennzeichnet, dass** auf die Anschlussflächen (7) am anschlussseitigen Ende der flexiblen Leiterfolie (1) Anschlusskontakte (38) aufgecrimpt sind.

7. Schalter nach einem der Ansprüche 3 bis 6, **dadurch gekennzeichnet, dass** die ortsfesten Kontaktflächen (6) auf dem Kontaktabschnitt (2) über zueinander parallele Leiterbahnen (5) mit den Anschlussflächen (7) verbunden sind, wobei vorzugsweise der die Leiterbahnen(5) tragende Verbindungsabschnitt (3) schmaler ist als der Kontaktabschnitt (2) und der Anschlussabschnitt (4).

8. Schalter nach Anspruch 6, **dadurch gekennzeichnet, dass** der Verbindungsabschnitt (3) mit Zentrieröffnungen (11) versehen ist, in welche Zentriervorsprünge des Schalters ragen.

9. Schalter nach einem der vorangegangenen Ansprüche, **dadurch gekennzeichnet, dass** er mit einem Schalthebel (22) versehener Lenkstockschalter ist, wobei die Schaltkontakte (6,33) im freien Endbereich des Schalthebels (22) liegen.

10. Schalter nach Anspruch 9, **dadurch gekennzeichnet, dass** der Verbindungsabschnitt (3) zwischen den Anschlussflächen (7) und den ortsfesten Kontaktflächen (6) längs des Schalthebels (22) geführt ist.

11. Schalter nach einem der vorangegangenen Ansprüche, **dadurch gekennzeichnet, dass** der Schalthebel (22) aus mindestens zwei sich in Hebellängsrichtung erstreckenden, miteinander verbundenen Hebelteilen (41,42) gebildet ist, wobei die Leiterfolie (1) im Verbindungsbereich der beiden Hebelteile (41,42) angeordnet ist.

12. Schalter nach Anspruch 11, **dadurch gekennzeichnet, dass** die Hebelteile (41,42) durch eine Oberschale (41) und eine mit dieser verrasteten Unterschale (42) gebildet ist, wobei der Umfang der Oberschale (41) vorzugsweise sehr viel größer als der Umfang der Unterschale (42) ist.

13. Schalter nach einem der Ansprüche 1 bis 12, **dadurch gekennzeichnet, dass** die Unterschale (42) mit einem oder mehreren federnden Vorsprüngen (45) versehen ist, die die Leiterfolie (1) aufnehmen.

14. Schalter nach einem der vorangegangenen Ansprüche, **dadurch gekennzeichnet, dass** die Leiterfolie (1) parallel zur Symmetrieebene der Schalen (41,42) des Hebels (22) ausgerichtet ist und vorzugsweise beim Übergang in den Anschlussabschnitt (4) und/oder Kontaktabschnitt (2) um etwa 90 Grad um die Längsachse der Leiterfolie gedreht ist.

15. Schalter nach einem der Ansprüche 11 bis 14, **dadurch gekennzeichnet, dass** die Leiterfolie (1) senkrecht zur Symmetrieebene zwischen den Schalen (41,42) geführt ist und einen gewölbten oder geraden Querschnitt hat.

16. Schalter nach einem der Ansprüche 11 bis 15, **dadurch gekennzeichnet, dass** die Leiterfolie (1) senkrecht zur Symmetrieebene der Schalen (41,42) geführt ist und einen gewölbten oder geraden Querschnitt hat.

17. Schalter nach einem der Ansprüche 12 bis 16, **dadurch gekennzeichnet, dass** zumindest die Oberschale (41) ein in sich geschlossener hohler Kunststoffkörper ist.

## Claims

1. Switch, of which the terminal contacts (38) of the circuits to be operated are connected by flexible conductors to its fixed contacts (6), which in combination with its moving contacts (33) operate the circuits, wherein the flexible conductors are formed by a flexible conductor foil (1), **characterised in that** the fixed contacts (6) are formed directly by the two-dimensional contact surfaces (6) on the contact portion of the conductor foil (1), wherein the two-dimensional contact surfaces are integrated in and integrally connected to the flexible conductor foil (1), that the fixed contacts (6) are associated with moving contacts (33), which are displaceable parallel to the surface of the fixed contacts (6), and that the contact surfaces (6) of the fixed contacts are formed by recesses of an insulating foil (35) applied onto the portion.

2. Switch according to claim 1, **characterised in that** the fixed contacts (6) are formed by printed conductors of the flexible conductor foil (1).

3. Switch according to claim 1 or 2, **characterised in that** the contact portion (2) of the flexible conductor foil (1) carrying the fixed contacts is fastened on a board (13) disposed in a fixed manner on the switch.

4. Switch according to claim 3, **characterised in that**, for centring the contact portion (2) on the board (13), at least one projection protruding from the board (13) projects into a corresponding opening (8 to 12) in the contact portion (2).

5. Switch according to claim 2 or 3, **characterised in that** the contact portion is glued onto the board (13).

6. Switch according to one of claims 1 to 5, **characterised in that** terminal contacts (38) are crimped onto the terminal surfaces (7) at the terminal end of the flexible conductor foil (1).

7. Switch according to one of claims 3 to 6, **characterised in that** the fixed contact surfaces (6) on the contact portion (2) are connected by mutually parallel printed conductors (5) to the terminal surfaces (7), wherein preferably the connecting portion (3) carrying the printed conductors (5) is narrower than the contact portion (2) and the terminal portion (4).

8. Switch according to claim 6, **characterised in that** the connecting portion (3) is provided with centring openings (11), into which centring projections of the switch project.

9. Switch according to one of the preceding claims, **characterised in that** it is a steering column-mounted switch provided with an operating lever (22), wherein the switching contacts (6, 33) lie in the free end region of the operating lever (22).

10. Switch according to claim 9, **characterised in that** the connecting portion (3) between the terminal surfaces (7) and the fixed contact surfaces (6) extends along the operating lever (22).

11. Switch according to one of the preceding claims, **characterised in that** the operating lever (22) is formed by at least two mutually connected lever parts (41, 42) extending in longitudinal direction of the lever, wherein the conductor foil (1) is disposed in the region of connection of the two lever parts (41, 42).

12. Switch according to claim 11, **characterised in that** the lever parts (41, 42) are formed by an upper shell (41) and a lower shell (42) latched to the latter, wherein the circumference of the upper shell (41) is preferably very much greater than the circumference of the lower shell (42).

13. Switch according to one of claims 1 to 12, **characterised in that** the lower shell (42) is provided with one or more resilient projections (45), which receive the conductor foil (1).

14. Switch according to one of the preceding claims, **characterised in that** the conductor foil (1) is aligned parallel to the plane of symmetry of the shells (41, 42) of the lever (22) and, preferably at the transition to the terminal portion (4) and/or contact portion (2), is rotated through approximately 90 degrees about the longitudinal axis of the conductor foil.

15. Switch according to one of claims 11 to 14, **characterised in that** the conductor foil (1) extends at right angles to the plane of symmetry between the shells (41, 42) and has a curved or straight cross section.

16. Switch according to one of claims 11 to 15, **characterised in that** the conductor foil (1) extends at right angles to the plane of symmetry of the shells (41, 42) and has a curved or straight cross section.

17. Switch according to one of claims 12 to 16, **characterised in that** at least the upper shell (41) is a self-contained hollow plastic body.

## Revendications

1. Commutateur dont les contacts (38) de raccordement des circuits électriques à commuter sont reliés par des conducteurs souples à ses contacts fixes (6) qui commutent les circuits électriques en liaison avec ses contacts mobiles (33), dans lequel les conducteurs souples sont constitués d'une feuille conductrice souple (1), **caractérisé en ce que** les contacts fixes (6) sont constitués directement par les surfaces étendues (6) de contact sur la portion de contact de la feuille conductrice (1) de sorte que les surfaces étendues de contact sont intégrées à la feuille conductrice souple (1) et sont liées à elle pour former un seul élément, **en ce que** les contacts fixes (6) sont associés aux contacts mobiles (33) qui peuvent coulisser parallèlement à la surface des contacts fixes (6) et que les surfaces (6) de contact des contacts fixes sont constituées d'évidements dans une feuille isolante (35) disposée sur la portion.

2. Commutateur selon la revendication 1, **caractérisé en ce que** les contacts fixes (6) sont constitués de pistes conductrices de la feuille conductrice souple (1).

3. Commutateur selon la revendication 1 ou 2, **caractérisé en ce que** la portion (2) de contact de la feuille conductrice souple (1) portant les contacts fixes est fixée sur une plaque (13) associée de manière fixe au commutateur.

4. Commutateur selon la revendication 3, **caractérisé en ce que** pour centrer la portion (2) de contact sur la plaque (13), au moins une saillie dépassant de la plaque (13) s'engage dans une ouverture correspondante (8 à 12) dans la portion (2) de contact.

5. Commutateur selon la revendication 2 ou 3, **caractérisé en ce que** la portion de contact est collée sur la plaque (13).

6. Commutateur selon l'une des revendications 1 à 5, **caractérisé en ce que** des contacts (38) de raccordement sont sertis sur les surfaces (7) de raccordement à l'extrémité de raccordement de la feuille conductrice souple (1).

7. Commutateur selon l'une des revendications 3 à 6, **caractérisé en ce que** les surfaces fixes (6) de contact sur la portion (2) de contact sont reliées par des pistes conductrices (5) parallèles les unes aux autres avec les surfaces (7) de raccordement, dans lequel de préférence la portion (3) de liaison portant les pistes conductrices (5) est plus étroite que la portion (2) de contact et que la portion (4) de raccordement.

8. Commutateur selon la revendication 6, **caractérisé en ce que** la portion (3) de liaison est munie d'ouvertures (11) de centrage dans lesquelles pénètrent des protubérances de centrage du commutateur.

9. Commutateur selon l'une des revendications précédentes, **caractérisé en ce qu'**il est un commutateur fixé à la colonne de direction muni d'un levier de commutation (12), dans lequel les contacts (6, 33) de commutation sont situés dans la région libre d'extrémité du levier (22) de commutation.

10. Commutateur selon la revendication 9, **caractérisé en ce que** la portion (3) de liaison est guidée entre les surfaces (7) de raccordement et les surfaces fixes (6) de contact le long du levier (22) de commutation.

11. Commutateur selon l'une des revendications précédentes, **caractérisé en ce que** le levier (22) de commutation est constitué d'au moins deux parties (41, 42) de levier s'étendant dans la direction longitudinale de levier, dans lequel la feuille conductrice (1) est disposée dans la région de liaison des deux parties (41, 42) de levier.

12. Commutateur selon la revendication 11, **caractérisé en ce que** les parties (41, 42) de levier sont constituées d'une enveloppe supérieure (41) et d'une enveloppe inférieure (42) emboîtée dans celle-ci, dans lequel l'étendue de l'enveloppe supérieure (41) est de préférence très supérieure à l'étendue de l'enveloppe inférieure (42).

13. Commutateur selon l'une des revendications 1 à 12, **caractérisé en ce que** l'enveloppe inférieure (42) est munie d'une ou de plusieurs protubérances élastiques (45) qui reçoivent la feuille conductrice (1).

14. Commutateur selon l'une des revendications précédentes, **caractérisé en ce que** la feuille conductrice (1) est disposée parallèlement au plan de symétrie des enveloppes (41, 42) du levier et, de préférence, lors de son déplacement vers la portion (4) de raccordement et/ou la portion (2) de contact, pivote d'environ 90 degrés autour de l'axe longitudinal de la feuille conductrice.

15. Commutateur selon l'une des revendications 11 à 14, **caractérisé en ce que** la feuille conductrice (1) est guidée entre les enveloppes (41, 42) verticalement par rapport au plan de symétrie et a une section incurvée ou droite.

16. Commutateur selon l'une des revendications 11 à 15, **caractérisé en ce que** la feuille conductrice (1) est guidée verticalement par rapport au plan de symétrie des enveloppes (41, 42) et a une section incurvée ou droite.

17. Commutateur selon l'une des revendications 12 à 16, **caractérisé en ce qu'**au moins l'enveloppe supérieure (41) est un corps creux refermé sur lui-même en matière plastique.
